**Europäisches Patentamt**

**European Patent Office**

**Office européen des brevets**

(11) Veröffentlichungsnummer: **0 208 973**
A2

# EUROPÄISCHE PATENTANMELDUNG

(21) Anmeldenummer: 86108800.3

(22) Anmeldetag: 27.06.86

(51) Int. Cl.⁴: **G 05 B 19/405**

(30) Priorität: 16.07.85 DE 3525270

(43) Veröffentlichungstag der Anmeldung: **21.01.87**
**Patentblatt 87/4**

(84) Benannte Vertragsstaaten: **AT BE CH DE FR GB IT LI NL SE**

(71) Anmelder: **ISD Industrielle Systeme Datentechnik GmbH, Odenwaldstr. 65 d, D-6109 Mühital 4 (DE)**

(72) Erfinder: **Eichner, Klaus W., Dr.-Ing., Im Wingertsgrund 102, D-6374 Steinbach/Ts (DE)**
Erfinder: **Kup, Bernhard, Dipl.-Ing., Odenwaldstrasse 65 d, D-6109 Mühita 4 (DE)**

(74) Vertreter: **Katscher, Helmut, Dipl.-Ing., Bismarckstrasse 29, D-6100 Darmstadt (DE)**

(54) Verfahren und Vorrichtung zur Verschleissüberwachung von Werkzeugen.

(57) Zur Verschleißüberwachung von Werkzeugen in Werkzeugmaschinen wird die bei jedem Bearbeitungsvorgang aufgebrachte Leistung bestimmt. Aus dem zeitlichen Verlauf der Leistung wird durch Integration die Nutzarbeit für jeden Bearbeitungsschritt ermittelt. Diese einzelnen Nutzarbeitswerte werden für jedes Werkzeug gesondert aufaddiert. Die so gebildete Summe wird jeweils mit einem vorgegebenen Grenzwert verglichen und liefert eine Aussage über den Werkzeugverschleiß.

EP 0 208 973 A2

ISD Industrielle Systeme Datentechnik GmbH

Verfahren und Vorrichtung zur Verschleißüberwachung
von Werkzeugen

Die Erfindung betrifft ein Verfahren zur Verschleißüberwachung von Werkzeugen in Werkzeugmaschinen, wobei die beim Bearbeitungsvorgang aufgebrachte Leistung bestimmt wird. Die Erfindung betrifft weiter eine Vorrichtung zur Durchführung des Verfahrens.

Neben direkt arbeitenden Verfahren zur Verschleißüberwachung, bei denen die am Werkzeug auftretende Veränderung durch beispielsweise mechanische, induktive oder optische Abtastung zwischen einzelnen Bearbeitungsvorgängen erfaßt wird, und indirekten Verfahren, bei denen durch zunehmenden Werkzeugverschleiß bedingte Änderungen am Werkstück erfaßt werden, sind verschiedene ebenfalls indirekt arbeitende Verfahren zur Verschleißüberwachung von Werkzeugen bekannt, die sich die Tatsache zunutze machen, daß mit zunehmendem Werkzeugverschleiß eine Veränderung der am Werkzeug auftretenden Kräfte erfolgt. Beispielsweise kann bei spanenden Bearbeitungsverfahren unmittelbar die am Zerspanungswerkzeug auftretende Kraft gemessen werden. Hierzu werden Kraftmeßeinrichtungen beispielsweise am Werkzeughalter angeordnet. Unter Laborbedingungen liefern diese Verfahren gute Ergebnisse; im praktischen Betrieb beeinträchtigen die Umgebungsbedingungen, insbesondere Späne, Kühlmittel und Temperatureinflüsse die Kraftmessung so sehr, daß diese Verfahren zu einer dauernden Verschleißüberwachung unter Betriebsbedingungen kaum geeignet sind.

Deshalb besteht der Wunsch, für eine indirekt arbeitende Verschleißüberwachung nur auf die Erfassung elektrischer Kenngrößen zurückzugreifen, die auch unter rauhen Betriebsbedingungen störungsfrei gemessen werden können, ohne daß hierzu empfindliche zusätzliche Meßeinrichtungen im Bearbeitungsbereich erforderlich sind.

Bei einem bekannten Verfahren der eingangs genannten Gattung (Katalog M-TSM-101 "Tool-Sense Werkzeugüberwachung", April 1983, der Valenite-Modco GmbH) wird aus einer elektrischen Spannungsmessung und Strommessung bei einer spanenden Werkzeugmaschine die aufgebrachte Leistung bestimmt und laufend mit vorgegebenen Leistungsgrenzwerten für den jeweiligen Bearbeitungsvorgang verglichen. Werden vorgegebene Grenzwerte überschritten, so wird entweder ein Anzeigesignal ausgelöst oder ein Steuerungseingriff durchgeführt, beispielsweise der Vorschub herabgesetzt oder die Werkzeugmaschine abgeschaltet. Bei diesem Verfahren wird ein Werkzeugverschleiß erst erkannt, wenn er zu einer deutlichen Erhöhung der auftretenden Zerspanungskraft und damit zu einer Erhöhung der Leistungsaufnahme geführt hat. In vielen Fällen ist in diesem Stadium aber bereits eine wesentliche Verringerung der Bearbeitungsqualität eingetreten; häufig kann auch ein Werkzeugbruch nicht verhindert werden. Andererseits bereitet es bei dem bekannten Verfahren aber auch Schwierigkeiten, die unerwünschte Abgabe eines Verschleißsignals in den Fällen auszuschließen, in denen kurzzeitige zulässige Leistungsspitzen auftreten.

Aufgabe der Erfindung ist es daher, ein Verfahren der eingangs genannten Gattung zu schaffen, das es mit meßtechnisch einfachen Mitteln ermöglicht, einen Werkzeugverschleiß so rechtzeitig zu erkennen, daß eine Verminderung der Bearbeitungsqualität oder eine Beschädigung des Werkzeugs vermieden wird. Insbesondere soll ein Werkzeugverschleiß auch schon vor einer wesentlichen Steigerung der Leistungsaufnahme der Werkzeugmaschine erkannt werden.

Diese Aufgabe wird erfindungsgemäß dadurch gelöst, daß der zeitliche Verlauf der Leistung erfaßt und die Leerlaufleistung bestimmt werden, daß durch Integration der die Leerlaufleistung übersteigenden Nutzleistung über jeweils die Zeitabschnitte der Bearbeitungsschritte die Nutzarbeit für jeden Bearbeitungsschritt ermittelt wird und daß die Nutzarbeitswerte aufaddiert und ihre Summe mit einem vorgegebenen Grenzwert verglichen wird.

Es hat sich gezeigt, daß die Summe der Nutzarbeitswerte eines Werkzeugs einen guten Rückschluß auf den aufgetretenen Werkzeugverschleiß ermöglicht. Dies gilt nicht nur bei Werkzeugen für die spanende Bearbeitung sondern auch für die spanlose Bearbeitung.

Mit dem erfindungsgemäßen Verfahren kann ein Werkzeugverschleiß auch dann schon erkannt werden, wenn er noch nicht zu einer wesentlichen Steigerung der am Werkzeug auftretenden Kraft bzw. der für den einzelnen Bearbeitungsschritt aufzubringenden Leistung geführt hat. Bei normalem Verschleiß von Werkzeugen für die spanende Bearbeitung, beispielsweise von Drehmeißeln, wird üblicherweise die Verschleißlänge, d.h. der gesamte Vorschubweg angegeben, den das Werkzeug bis zum Erreichen eines vorgegebenen Verschleißwertes zurückgelegt hat. Für diesen Fall des normalen Verschleißes ist die Summe der Nutzarbeitswerte ebenso aussagekräftig, jedoch einfacher zu ermitteln. Darüber hinaus wird mit dem erfindungsgemäßen Verfahren aber auch ein überdurchschnittlicher Verschleiß des Werkzeugs rechtzeitig und zuverlässig erkannt, weil er zu einer wesentlichen Vergrößerung der Summe der Nutzarbeitswerte führt. Dieser überdurchschnittliche Verschleißfall kann durch Ermittlung der Verschleißlänge nicht erfaßt werden.

Darüber hinaus ist das erfindungsgemäße Verfahren aber auch dazu geeignet, den Werkzeugverschleiß bei solchen Bearbeitungsvorgängen zu erfassen, bei denen ein zunehmender Werkzeugverschleiß nicht zu einer proportionalen Erhöhung der aufgenommenen Leistung, sondern unter Umständen sogar zu einer Verringerung der aufgebrachten Leistung führt, wie dies zum Beispiel bei spanlosen Bearbeitungsverfahren der Fall sein kann.

Vorteilhafte Ausgestaltungen der Erfindung einschließlich einer besonders vorteilhaften Vorrichtung zur Durchführung des Verfahrens sind Gegenstand von Unteransprüchen.

Die Erfindung wird nachfolgend an einem Anwendungsbeispiel näher erläutert. Es zeigt:

Fig. 1   in stark vereinfachten Darstellungsweise eine
         Vorrichtung zur Verschleißüberwachung an einer
         Werkzeugmaschine,

Fig. 2   ein Blockschaltbild der Vorrichtung nach Fig. 1,

Fig. 3   ein Diagramm des Leistungsverlaufs bei einem
         spanenden Bearbeitungsvorgang und

Fig. 4   ein Diagramm der Summenbildung der Nutzarbeitswerte mehrerer Bearbeitungsvorgänge.

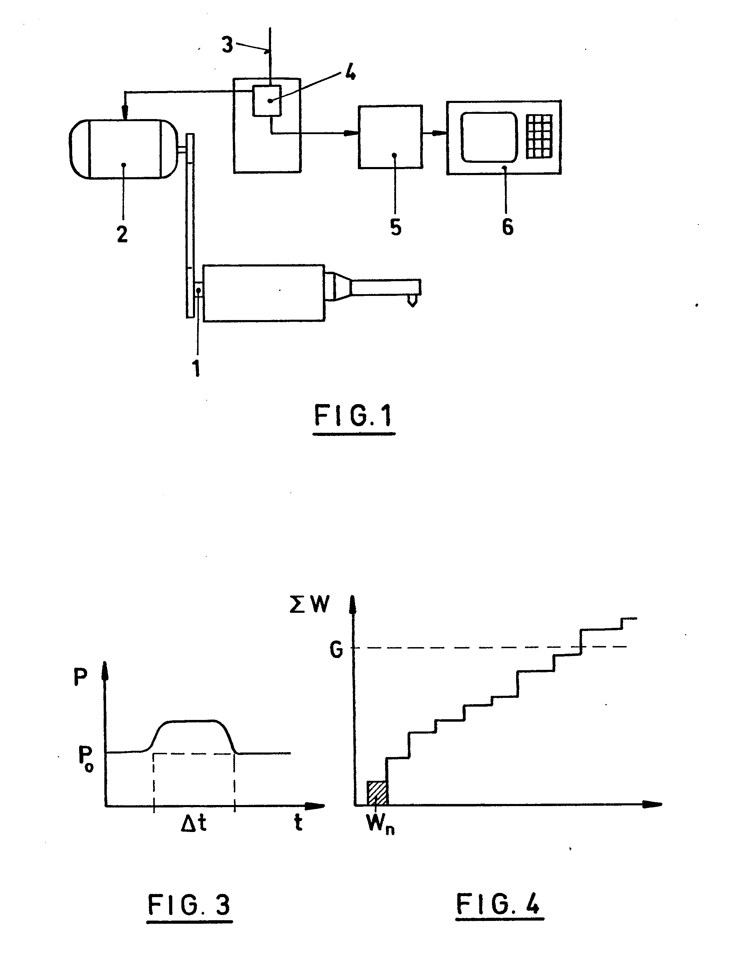

Wie in Fig. 1 stark vereinfacht dargestellt ist, wird
eine Werkzeugspindel 1 einer Werkzeugmaschine, beispielsweise die elektrisch angetriebene Hauptspindel einer
Bohrmaschine, von einem Elektromotor 2 angetrieben. Der
vom Motor 2 aus einem Netzanschluß 3 aufgenommene Strom
und die Spannung werden in einem Meßwandler 4 erfaßt und
einem Leistungsrechner 5 zugeführt, der hieraus den zeitlichen Verlauf der Leistung bestimmt und an einen Verschleißrechner 6 übermittelt. Der Verschleißrechner 6
ermittelt hieraus den Werkzeugverschleiß und liefert Anzeige- oder Steuersignale.

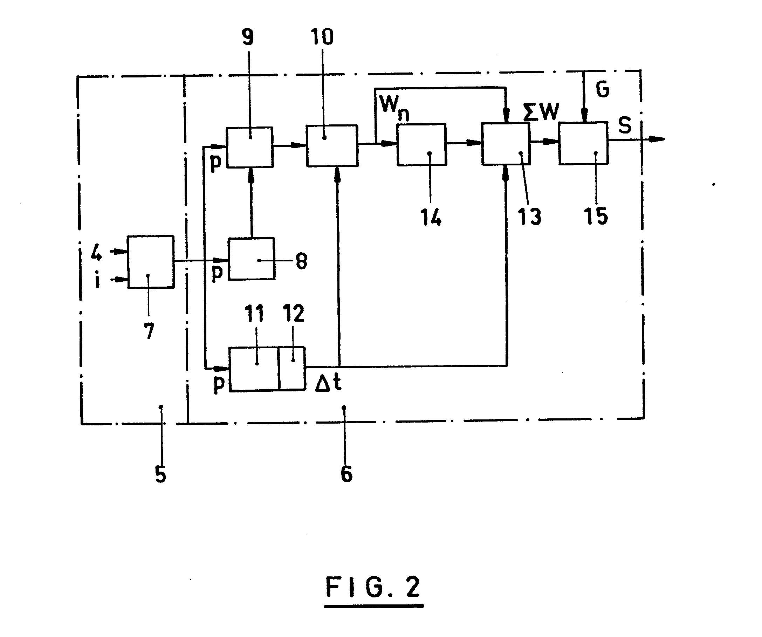

Das Funktionsschema des Verschleißrechners 6 ergibt sich
aus dem Blockschaltbild nach Fig. 2.

Im Leistungsrechner 5, der im wesentlichen ein Multiplizierer 7 ist, wird aus der Spannung u und dem Strom i
ein der Leistung p entsprechendes Ausgangssignal gebildet.
In einem Mittelwertbilder 8 wird durch Mittelwertbildung
und nachfolgendem Grenzwertvergleich die Leerlaufleistung
$p_0$ ermittelt und einem Subtrahierer 9 zugeführt, dem auch
das Signal des zeitlichen Verlaufs der Leistung p zugeführt wird. Der Subtrahierer 9 bildet hieraus die Nutzleistung $p - p_0$, die einem Integrierer 10 zugeführt wird.

Ein Differenzierer 11 mit nachgeschaltetem Vergleicher 12 hat aus dem zeitlichen Verlauf der Leistung p die Leistungsdauer $\Delta t$ zwischen einem Leistungsanstieg über die Leerlaufleistung $p_0$ und dem nachfolgenden Leistungsabfall zurück auf $p_0$ ermittelt und dieses Signal dem Integrierer 10 zugeführt. Hierbei erfolgte in dem Vergleicher 12 ein Vergleich beispielsweise mit einem vorgegebenen festen Wert.

Das Signal der Leistungsdauer $\Delta t$ steuert den Integrierer 10 in der Art, daß dieser während der Zeitdauer $\Delta t$ aus der mittels des Subtrahierers 9 gebildeten Nutzleistung durch zeitliche Integration den Nutzarbeitswert $W_n$ bildet.

Die auf diese Weise bei jedem der n Bearbeitungsschritte gebildeten Nutzarbeitswerte $W_n$ werden in einem vorzugsweise digital arbeitenden Speicher 13 für jedes Werkzeug getrennt gespeichert. Außerdem werden die Nutzarbeitswerte $W_n$ auch von einem Addierer 14 zu einem Arbeitssummenwert $\Sigma W$ aufaddiert und ebenfalls in dem Speicher 13 abgelegt, der mehrere Speicherplätze aufweist. Dieser Wert $\Sigma W$ stellt ein Maß für den jeweiligen Werkzeugverschleiß dar, wobei die Arbeitssumme $\Sigma W$ nicht in allen Fällen dem Verschleiß proportional sein muß.

In einem dem Speicher 13 nachgeschalteten Vergleicher 15 wird die jeweilige Summe der Nutzarbeitswerte $\Sigma W$ beispielsweise mit einem manuell oder von einer Maschinensteuerung vorgegebenen Grenzwert G verglichen. Wird der Grenzwert erreicht oder überschritten, so liefert der Vergleicher ein Signal S, das eine optische Anzeige und/oder einen Steuerungseingriff auslöst.

Dieser Vorgang ist in Fig. 4 dargestellt. Die einzelnen Nutzarbeitswerte $W_n$ (in Fig. 3 für einen einzelnen Bearbeitsvorgang als Flächenabschnitt unter der Kurve des zeitlichen Verlaufs der Leistung p dargestellt) werden zur Nutzarbeitssumme $\Sigma W$ aufaddiert, bis sie einen vorgegebenen Grenzwert G erreicht haben.

Stattdessen ist es auch möglich, die einzelnen Nutzarbeitswerte $W_n$, zu denen in diesem Fall im Speicher 13 auch die jeweils zugehörige Zeitdauer $\Delta t$ abgespeichert wird, mit einer fest abgespeicherten und/oder durch manuelle Eingabe veränderlichen Grenzkurve im Vergleicher 15 zu vergleichen. Insbesondere ist als solche Grenzkurve eine vorgegebene oder vorher ermittelte Verschleißkurve geeignet.

ISD 121

0208973

ISD Industrielle Systeme Datentechnik GmbH

Verfahren und Vorrichtung zur Verschleißüberwachung
von Werkzeugen

P a t e n t a n s p r ü c h e

1. Verfahren zur Verschleißüberwachung von Werkzeugen
in Werkzeugmaschinen, wobei die beim Bearbeitungsvorgang aufgebrachte Leistung bestimmt wird, dadurch
gekennzeichnet, daß der zeitliche Verlauf der Leistung
(p) erfaßt und die Leerlaufleistung ($p_0$) bestimmt
werden, daß durch Integration der die Leerlaufleistung
($p_0$) übersteigenden Nutzleistung ($p - p_0$) über jeweils die Zeitabschnitte ($\Delta t$) der Bearbeitungsschritte die Nutzarbeit ($W_n$) für jeden Bearbeitungsschritt ermittelt wird und daß die Nutzarbeitswerte
($W_n$) aufaddiert und ihre Summe ($\Sigma W$) mit einem vorgegebenen Grenzwert (G) verglichen wird.

2. Verfahren nach Anspruch 1, dadurch gekennzeichnet,
daß die Nutzarbeitswerte ($W_n$) für jedes Werkzeug getrennt aufaddiert und ihre Summe ($\Sigma W$) mit einem dem
jeweiligen Werkzeug zugeordneten gesonderten Grenzwert (G) verglichen wird.

3. Verfahren nach Anspruch 1, dadurch gekennzeichnet, daß die Ermittlung der Zeitabschnitte ($\Delta$t) der Bearbeitungsschritte durch Bestimmung der Zeitpunkte des Leistungsanstiegs am Beginn und des Leistungsabfalls am Ende jedes Bearbeitungsschritts erfolgt.

4. Verfahren nach Anspruch 1, dadurch gekennzeichnet, daß der zum Vergleich mit der Summe ($\Sigma$W) der Nutzarbeitswerte herangezogene Grenzwert als fester Grenzwert (G) vorgegeben wird.

5. Verfahren nach Anspruch 1, dadurch gekennzeichnet, daß der zum Vergleich mit der Summe ($\Sigma$W) der Nutzarbeitswerte herangezogene Grenzwert als Grenzkurve vorgegeben wird.

6. Vorrichtung zur Durchführung des Verfahrens nach einem der Ansprüche 1 bis 6 mit einem die elektrische Leistung des Werkzeugmaschinenantriebs aus einer Strommessung und einer Spannungsmessung bestimmenden Multiplizierer, dadurch gekennzeichnet, daß ein der Leistung entsprechendes Ausgangssignal (p) des Multiplizierers (7) einem Mittelwertbilder (8) zugeführt wird, daß ein Subtrahierer (9) aus dem Ausgangssignal (p) des Multiplizierers (7) und aus einem vom Mittelwertbilder (8) gelieferten Signal, das der Leerlaufleistung ($p_0$) entspricht, ein Nutzleistungssignal ($p - p_0$) an einen Integrierer (10) liefert, daß ein Differenzierer (11) aus dem zeitlichen Verlauf der Leistung (p) ein den Beginn bzw. das Ende jedes Bearbeitungsschrittes anzeigendes Zeitsignal an einen an den Subtrahierer (9) angeschlossenen Integrierer (10) liefert und daß die

0208973

vom Integrierer (10) gelieferten Nutzarbeitswerte $(W_n)$ in einem Speicher (13) addiert und die so erhaltene Summe $(\Sigma W)$ einem Vergleicher (15) zugeführt wird, dem ein Grenzwert (G) eingegeben wird.

FIG.1

FIG. 3

FIG. 4

FIG. 2